# EUROPEAN PATENT APPLICATION

(11) **EP 4 523 934 A1**
(43) Date of publication of application: **19.03.2025**
(21) Application number: 22940508.9
(22) Date of filing: 25.11.2022
(51) Int. Cl.: B60J 1/02, B60J 1/08

(54) **KIT FOR ATTACHING A TEMPORARY WINDOW FOR VEHICLES**

(30) Priority: 03.05.2022 ES 202230726 U
(71) Applicant: Takahashi Casals, Marc, 17800 Olot (Girona) (ES)
(72) Inventor: Takahashi Casals, Marc, 17800 Olot (Girona) (ES)
(74) Representative: Danubia Patent & Law Office LLC
(86) International application number: PCT/ES2022/070763
(87) International publication number: WO 2023/214098

(57) **Abstract**

Temporary window fixing kit for vehicles comprising an adjustment profile (1), for coupling to the slot (11) of the frame where the window (13) to be replaced is to be placed, a transparent sheet (2), pre-cut to size or can be cut to the size of the window, and joining means (14) for fixing the sheet (2) to the adjustment profile (1) once coupled to the frame. The adjustment profile (1) has a wide part (1a) for adjusting to the slot (11) and a tab (1b) on the opposite part with the joining means (14). For adjustment to the slot (11), the profile (1) has on the wide part (1a), either an expansion mechanism (E) or a clamping mechanism (P) with an adjustment tool (7), or longitudinal grooves (S). Optionally, it also comprises a protective profile (3).

## Description

### OBJECT OF THE INVENTION

The invention, as expressed in the title of this specification, refers to a kit for fixing temporary windows for vehicles that provides, for the function for which it is intended, advantages and characteristics described in detail below and represent an improvement in the current state of the art.

The object of the present invention is a kit that, comprising at least one adjustment profile, suitable for coupling to the frame of the window to be replaced, and a transparent sheet that is fixed to said profile through attachment means provided for this purpose, that constitute the necessary elements to be able to provisionally replace in a quick and simple manner, any of the windows of a vehicle that has broken.

### FIELD OF APPLICATION OF THE INVENTION

The field of application of the present invention is within the sector of the industry dedicated to the manufacture of automobile accessories.

### BACKGROUND OF THE INVENTION

The technical problem that the present invention seeks to solve arises from the inconvenience that occurs when a side, front or rear window of a vehicle breaks, and we must face the situation of making the repair quickly.

This causes an urgent visit to the window repair expert, which results in having to deal with the discomfort of the wind while driving to the place or, in the worst case, the rain and even the winter cold, not to mention the fact that, obviously, it is dangerous to drive in these conditions, in addition to the fact that, when the workshop does not have the appropriate glass, we have to spend a couple of days in these driving conditions or have the car stopped.

Currently, to avoid these conditions, what is usually done is to place plastic or cardboard with adhesive tape, which, in addition to peeling off easily, causes visibility to be lost, is not safe and creates greater discomfort.

According to the above, it would be desirable to have adequate means to be able to carry out a temporary replacement of the window that is sufficiently resistant and does not impede or reduce visibility, being at the same time easy to install and low economic cost so that it can be acquired and installed by the user himself until the window is properly replaced in the repair shop.

As a reference to the current state of the art, it should be noted that a temporary replacement window and method are known from document WO2000076762A1. Specifically, said document describes a temporary replacement window consisting of a transparent sheet that is cut to the general shape of the window opening to be replaced and fixed around it by means of a double-sided adhesive tape that is previously glued around the periphery of the window opening to form a temporary hermetic seal and a barrier to the elements.

The main difference with the kit object of the present invention is that the tape is a conventional tape that has to be stuck on the periphery of the window to be replaced, therefore, on the surface of the vehicle body, which normally has curved or non-flat shapes, which can be dirty and which are difficult to seal, especially when they define a narrow frame with various steps of different materials, which makes it difficult for the tape to stick correctly and, consequently, for the replacement sheet to be properly fastened, especially if when driving the vehicle the wind or other atmospheric elements act on the tape and peel it off.

That is why in the kit of the present invention, a system is contemplated to fix the sheet with a specific profile that allows it to be fixed to the slot of the vehicle frame in which the window to be replaced is placed, providing a much safer and more effective fixing of the replacement transparent sheet.

Thus, at least on the part of the applicant, the existence of any other temporary window fixing kit for vehicles is unknown, nor any other invention of similar application, which has technical characteristics equal to or similar those presented by the one claimed here.

### EXPLANATION OF THE INVENTION

The temporary window fixing kit for vehicles proposed by the invention is configured as the ideal solution to the above mentioned objective, the characterizing details that make it possible and that distinguish it being conveniently included in the final claims that accompany this description.

Specifically, what the invention proposes, as has been pointed out above, is a kit consisting of a set of elements that allow the temporary replacement, in a quick and simple manner, of any of the side, front or rear windows of a vehicle, comprising as such elements, at least:
- an adjustment profile, suitable for coupling and fixing to the slot in the frame of the vehicle body in the place of the window to be replaced,
- a transparent sheet, which can be attached to the adjustment profile once it is coupled to the frame, and
- joining means between the adjustment profile and the transparent sheet.

Thus, in one embodiment, the transparent sheet of the kit is pre-cut with the specific shape and size of the windows of a vehicle of a specific brand and model. In this way, the kit is sold with different sheet options, allowing the user to purchase one or more depending on the model of their vehicle. In the event of breakage, the user simply needs to place the profile and fix the pre-cut sheet. Alternatively, the kit can include the profile, and the pre-cut sheet joined together as a single element to make installation even easier.

However, in an alternative embodiment, the kit has a universal character such that the sheet is a cuttable sheet that the user can adapt to the shape and size of any of their windows and regardless of the brand and model of vehicle they have. In this case, the kit, in addition to the adjustment profile and the transparent sheet, will also include:
- a cutting tool for cutting the sheet, and
- a marking tool, for marking the cutting line on the sheet.

Preferably, the adjustment profile is made of flexible rubber-type material or similar and has a configuration with a wider part for adjustment to the inside of the slot of the frame of the vehicle body and a narrow extension, like a tab, on the opposite side where it has the joining means to fix the edge of the sheet on it.

Preferably, said joining means consist of an adhesive strip, although other options are not ruled out, such as magnetic means, using a magnet, one or more ferromagnetic elements, a zipper, snap buttons, or others.

In one embodiment, the adjustment profile has a grooved configuration in the widest part where it has an expansion or clamping mechanism that, by means of an adjustment tool that will be provided for this purpose with the kit, causes its expansion or clamping, by means of a small spring, expansion screw or simple mechanism, so that it allows a better fixation with the walls of the frame slot.

Preferably, the adjustment tool is an Allen key or a screwdriver.

And, in an alternative embodiment, the adjustment profile has, in the wide adjustment part, a series of longitudinal grooves that act as a claw to ensure a better fixation with the walls of the frame slot with the advantage, in this case, of not requiring the use of any additional adjustment tool for the placement of the profile.

In addition, in this optional embodiment, the wide fixing part of the profile can be reduced to adapt it to narrower slots, since the slots of the frames in which the windows of most vehicles are incorporated normally have a width of between 3 and 9 mm. The adjustment profile, thanks to this option, allows this range to be covered and even adjusted to slots between 2mm and 15mm wide.

In an optional embodiment of the invention, the kit also includes a protective profile that can be adhered by means of adhesive tape to the front contour of the sheet once it has been fixed to the adjustment profile, with the essential purpose of preventing the passage of air and/or water flows into the internal area of the vehicle. Preferably, said protective profile is a decorative profile made from a foam rubber material. And, in an alternative option, the protective profile is directly a very wide and resistant adhesive strip, such as duct tape, suitable for outdoor use and waterproof.

Referring to the sheet, preferably, is made of flexible and transparent plastic material, such as PVC, and may or may not be semi-rigid and, optionally, provided with a water repellent anti-rain treatment, to always ensure good visibility for the user.

Preferably, the cutting tool for cutting the sheet to the size of the window to be replaced is a pair of scissors, a cutter-type blade, or a similar tool suitable for facilitating the cutting of the sheet.

Generally, the marking tool is of the felt-tip pen or marker type, suitable for facilitating the drawing of the perimeter to be cut out on the surface of the sheet.

In a preferred embodiment of the invention, the kit also includes an installation instruction manual to indicate to the user, step by step, how to use and place each of the elements that make up the kit. It is not ruled out that, in addition, in the physical paper manual itself or on the kit packaging, a web address or a link label is included to access a digital application with audiovisual information on the installation method.

Specifically, the steps to be followed to carry out the temporary replacement of the window with the elements of the kit will be, at least, the following:
- Measure and cut the adjustment profile according to the size of the frame of the window to be replaced, at least in the upper part in the case of side windows or around the entire contour in the case of front or rear windows.
- Place the corresponding sections of adjustment profile in the slot of the body frame, fixing it either with the expansion or clamping mechanism, using the adjustment tool, or simply by pressing so that the grooves are held in said groove.
- Place the sheet on the frame of the window to be replaced.
- When the sheet is already pre-cut, it will be enough to fix it by the edges to the adjustment profile using the attachment means provided which, in this case, may be provided in the profile, on the edge of the sheet or in both elements.
- And, when the sheet is cuttable for universal use as a replacement for any window, a portion of said sheet will be placed on the frame, to draw the cutting line with the marker in correspondence with the perimeter of said frame.
- Cut the sheet along the marked line.
- And proceed to join the sheet to the profile with the joining means.
- When said means consist of a strip of double-sided adhesive tape, the strip of waxed paper that protects the adhesive strip of the adjustment profile will have to be removed.
- Stick the edge of the sheet on the adhesive strip of the adjustment profile.

Finally, it should be noted that, preferably, the kit also includes a storage container to conveniently contain all the elements of the kit and, for example, be able to carry it in the trunk of the vehicle to have it at hand if necessary. Preferably said container is a box or a tube.

With everything above, the kit of the invention allows to solve the inconvenience of having a broken vehicle window that needs to be replaced urgently.

The kit is therefore suitable for temporarily replacing the windows of any vehicle in an easy and immediate manner, in any place where the breakage occurs, allowing safe driving that protects the driver and passengers from impacting objects or external agents.

### DESCRIPTION OF THE DRAWINGS

To complement the description that is being made and to help a better understanding of the characteristics of the invention, a set of drawings is attached to this specification, as an integral part thereof, in which the following has been represented for illustrative and non-limiting purposes:
Figure 1.- Shows a schematic perspective view of a first example of the elements that may comprise the provisional window fixing kit for vehicles object of the invention, specifically an example that includes a fixing profile, a protection profile, and an adhesive tape, in addition to the sheet and other elements;
Figures 2-A, 2-b show a schematic side elevation view of the expansion mechanism that may comprise the adjustment profile, according to the example in Figure 1, represented respectively in the open and closed position;
Figure 3 shows a schematic side elevation view of the clamping mechanism that may comprise the adjustment profile, according to the example in Figure 1;
Figure 4 shows a schematic side elevation view of a vehicle with the protective profile and the sheet placed on a side window;
Figure 5 shows a schematic perspective view of another example of the kit of the invention, specifically an example that includes a fixing profile with longitudinal gripping grooves, in addition to the sheet and other elements;
Figure 6 shows an enlarged view of a portion of the fixing profile comprising the kit of the invention, according to the example shown in Figure 5, showing the configuration of the gripping grooves and the self-adhesive strip;
Figure 7 shows a view similar to the previous one of the fastening profile, in this case represented from the opposite side;
Figures 8-A and 8-B show a perspective view of a portion of the fixing profile, according to the example of Figures 6 and 7, in this case showing, in Figure 8-A, the cutting points to reduce the width of the adjustment zone and, in Figure 8-B, the method of tearing the profile to achieve said reduction along the entire profile section;
Figure 9 shows a schematic sectional view of the slot in the frame in which the window of the vehicle is incorporated, represented with the window incorporated; and
Figures 10-A, 10-B and 10-C show respective schematic sectional views of three different widths of slot for window with the profile and sheet of the kit of the invention incorporated, showing three possible modes of use depending on the width of the slot, one normal, one for a narrow slot by cutting a portion of the profile, and one for a wide slot by fixing the profile with the protective profile.

### PREFERRED EMBODIMENT OF THE INVENTION

In view of the mentioned figures, and in accordance with the numbering adopted, several examples of non-limiting embodiments of the provisional window fixing kit for vehicles of the invention can be observed, which includes what is described in detail below.

Thus, as can be seen in said figures, the kit of the invention comprises, at least:
- an adjustment profile (1), attachable to the slot (11) of the frame of the vehicle body (12) where the window (13) to be replaced is to be placed,
- a transparent sheet (2), attachable to the adjustment profile (1) once attached to the slot (11), and
- joining means (14), between the adjustment profile (1) and the transparent sheet (2).

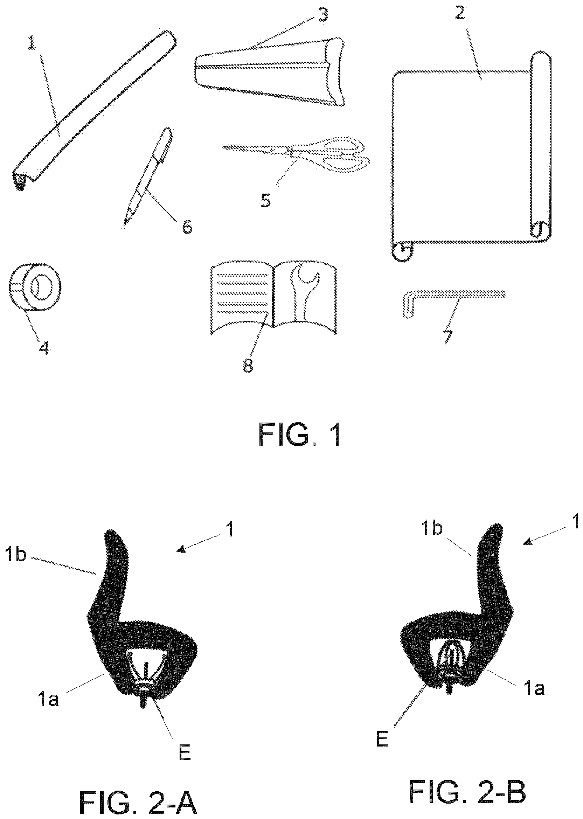

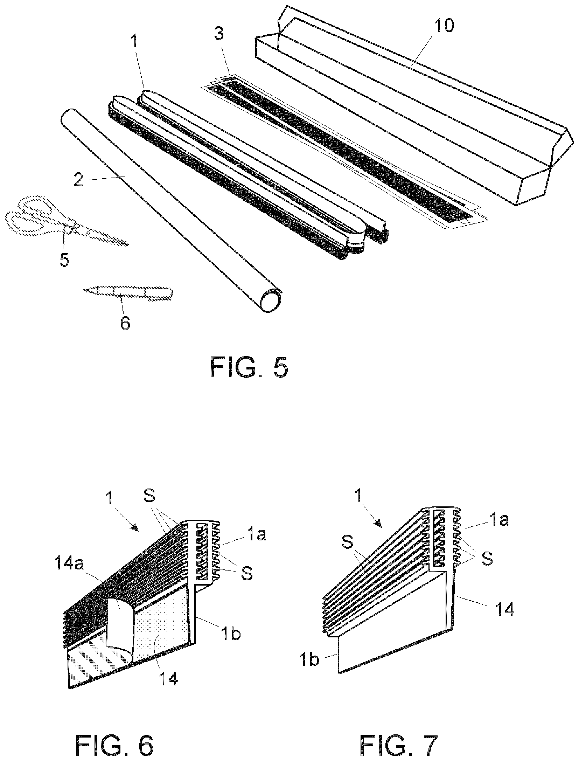

In one embodiment (not shown), the transparent sheet (2) is a pre-cut sheet with the shape and size of the window (13) hole to be replaced. And, in one embodiment, such as that shown in figures 1 and 5, the transparent sheet (2) is a portion of sheet material that can be cut to the size of any window (13) of any vehicle, in which case the kit (1) of the invention, in addition to the adjustment profile (1) and said cuttable sheet (2), comprises:
- a cutting tool (5), suitable for cutting the sheet (2), and
- a marking tool (6) suitable for marking the sheet (2).

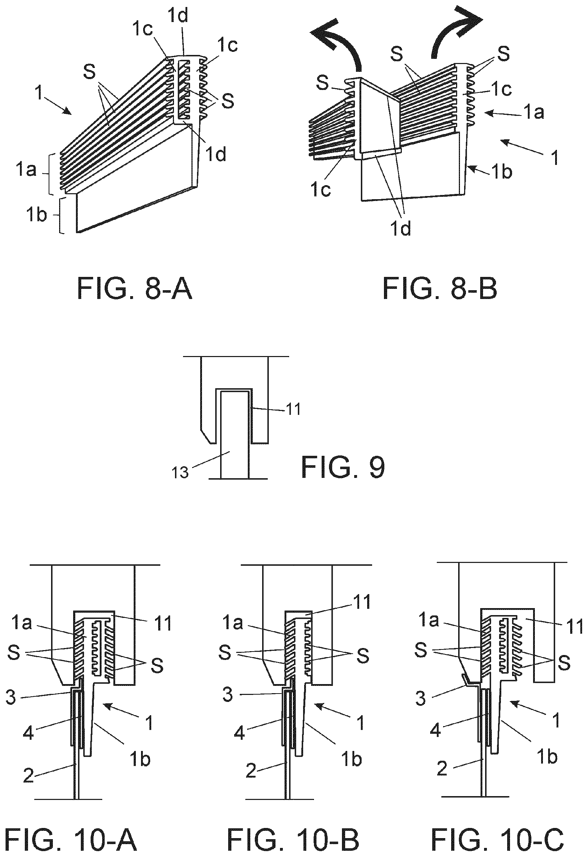

Preferably, the adjustment profile (1) is made of a flexible rubber-type material or similar and has a section configuration with a wide part (1a) for fixing to the slot (11) and a tab (1b) on the opposite part that emerges outside the slot (11), as shown in figure 9-B and where, preferably, the joining means (14) are incorporated.

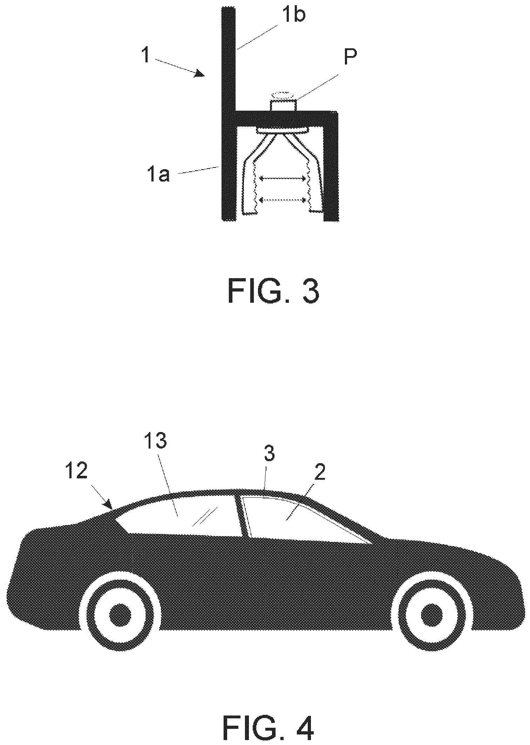

In one embodiment option, the adjustment profile (1) has an expansion mechanism (E) or clamping mechanism (P) in the wide fixing part (1a), which has a grooved shape, with a small spring, expansion screw or simple mechanism that allows increasing the fixing of said part of the profile (1) with the walls of the slot (11) of the frame. Figures 2 and 3 show, schematically, respective examples of said expansion (E) and clamping (P) mechanisms.

In such case, preferably, the kit also includes an adjustment tool (7) to cause the expansion or pinching of said mechanism.

Preferably, said adjustment tool (7) is an Allen key or a screwdriver.

In an alternative embodiment, the adjustment profile (1) has longitudinal grooves (S) that emerge from the walls that define the wide part (1a) for fixing the profile, at least on the external face thereof, which act as a claw to increase the fixation with the walls of the slot (11) of the frame. An example of said profile is shown in figures 5 to 7.

Optionally, the wide part (1a) with grooves (S) for holding the profile (1) is of a reducible width to be able to adapt to narrower slots (11). For this purpose, preferably, said wide part (1a), as shown in figure 8-A, is defined by two parallel walls (1c) provided with the described grooves (S) that are joined together by one or two connecting bridges (1c) that can be torn by pulling said walls (1c) towards opposite sides (figure 8-B) after making a small cut in said bridges (1c) at the end of the profile (1) (figure 8-A) and that, being made of rubber or similar soft material, are easily separated, allowing the use of the profile with a wide part (1a) provided with longitudinal grooves (S) that only comprises one wall (1c) and, therefore, is suitable for narrower slots (11). Figures 10 and 10-B show two types of slot width (11) and the placement of the profile (1) without cutting and with one of said walls (1c) cut.

Referring to the joining means (14) provided on the tab (1b) of the adjustment profile (1), preferably, consist of an adhesive strip provided with a strip of waxed protective paper (14a), as shown in the example in figure 6, although, optionally, said means (14) may consist of a magnet, a zipper, snap buttons or any other joining means suitable for fixing the edge of the sheet (2) to the adjustment profile (1), the joining means (14) being able to be incorporated both in the profile (1), and in the edge of the sheet (2) or in both elements, depending on the type of joining means.

In any case, in another embodiment of the invention, the kit also comprises a protective profile (3) which is fixed on the front contour of the sheet (2) once it is fixed to the adjustment profile (1), between it and the frame of the vehicle (12), such that it prevents the passage of air and/or water flows into the interior of the vehicle (12).

Preferably, the protective profile (3) is a decorative foam rubber profile which is fixed with an adhesive tape (4) provided for this purpose with the kit (1). And, in an alternative embodiment option, such as that shown in figure 5, the protective profile (3) is directly an adhesive strip, duct tape type, suitable for outdoor use and waterproof, which also allows the profile (1) to be fixed more securely in cases where the slot (11) of the window is wider, as shown in figure 10-C. In this case, the protective profile (3) covers part of the frame and part of the sheet (2) .

As for the sheet (2), preferably, it is a flexible and transparent plastic sheet, preferably PVC, semi-rigid or not, which, optionally, incorporates a water repellent treatment on at least one of its sides.

Referring to, the cutting tool (5) to cut the sheet (2), if it is cuttable, preferably, is a pair of scissors or similar, as shown in figures 1 and 5, and the marking tool (6), preferably, is a marker or felt-tip pen type.

Preferably, the kit also includes a physical and/or digital installation instruction manual (8).

Finally, preferably, the kit also includes a storage container (10) which, for example, consists of a box like the one shown in figure 5, or which may consist of a tube, to contain, occupying a minimum amount of space, the set of elements that comprise the kit (1).

Having sufficiently described the nature of the present invention, as well as the manner of putting it into practice, it is not considered necessary to make its explanation more extensive so that any expert in the field understands its scope and the advantages derived from it.

## Claims

1. Temporary window fixing kit for vehicles, **characterized by** comprising, at least:
- an adjustment profile (1), attachable to the slot (11) of the frame of the vehicle body (12) where the window (13) to be replaced is to be placed,
- a transparent sheet (2), attachable to the adjustment profile (1) once attached to the slot (11), and
- joining means (14), between the adjustment profile (1) and the transparent sheet (2).

2. Temporary window fixing kit for vehicles, according to claim 1, **characterized in that** the transparent sheet (2) is a pre-cut sheet with the shape and size of the hole in the window (13) to be replaced.

3. Temporary window fixing kit for vehicles, according to claim 1, **characterized in that** the transparent sheet (2) is a portion of sheet material that can be cut to the size of any window (13).

4. Temporary window fixing kit for vehicles, according to claim 3, **characterized in that** it also comprises:
- a cutting tool (5), suitable for cutting the sheet (2), and
- a marking tool (6) suitable for marking the sheet (2).

5. Temporary window fixing kit for vehicles, according to any of the preceding claims, **characterized in that** the adjustment profile (1) is made of flexible rubber-type material or similar and has a section configuration with a wide part (1a) for fixing to the slot (11) and a tab (1b) on the opposite part.

6. Temporary window fixing kit for vehicles, according to claim 5, **characterized in that** the adjustment profile (1) has an expansion (E) or clamping (P) mechanism in the wide part (1a) with a small spring, expansion screw or simple mechanism to increase the fixing of said part of the profile (1) with the walls of the slot (11) of the frame.

7. Temporary window fixing kit for vehicles, according to claim 6, **characterized in that** it comprises an adjustment tool (7) to cause the expansion or clamping of the expansion (E) or clamping (P) mechanism of the adjustment profile (1).

8. Temporary window fixing kit for vehicles, according to claim 7, **characterized in that** the adjustment tool (7) is an Allen key or a screwdriver.

9. Temporary window fixing kit for vehicles, according to claim 5, **characterized in that** the adjustment profile (1) has longitudinal grooves (S) emerging from the walls defining the wide fixing part (1a) of the profile, at least on the external face thereof, which act as a claw to increase the fixing with the walls of the slot (11) of the frame.

10. Temporary window fixing kit for vehicles, according to claim 9, **characterized in that** the wide part (1a) with grooves (S) for holding the profile (1) is of a reducible width to adapt to narrower slots (11).

11. Temporary window fixing kit for vehicles, according to claim 10, **characterized in that** the wide part (1a) of the profile (1) is defined by two parallel walls (1c) provided with grooves (S) which are joined together by means of one or two joining bridges (1c) that can be torn by pulling said walls (1c) towards opposite sides after making a small cut in said bridges (1c) at the end of the profile (1).

12. Temporary window fixing kit for vehicles, according to any of claims 5 to 11, **characterized in that** the tab (1b) of the adjustment profile (1) incorporates the joining means (14).

13. Temporary window fixing kit for vehicles, according to claim 12, **characterized in that** the joining means (14) consist of an adhesive strip provided with a strip of waxed protective paper.

14. Temporary window fixing kit for vehicles, according to any of claims 1 to 11, **characterized in that** the joining means (14) consist of a magnet, a zipper, snap buttons, or other means incorporated in the profile (1) or in the edge of the sheet (2) or in both elements.

15. Temporary window fixing kit for vehicles, according to any of the preceding claims, **characterized in that** it also comprises a protective profile (3) that is fixed on the front contour of the sheet (2) once it is fixed to the adjustment profile (1), between this and the frame of the vehicle (12), such that it prevents the passage of air and/or water flows into the interior of the vehicle (12).

16. Temporary window fixing kit for vehicles, according to claim 15, **characterized in that** the protective profile (3) is a decorative foam rubber profile; and because the kit comprises an adhesive tape (4) to adhere said protective profile (3) to the front contour of the sheet (2) once it is placed on the adjustment profile (1).

17. Temporary window fixing kit for vehicles, according to claim 15, **characterized in that** the protective profile (3) is an adhesive strip suitable for outdoor use and waterproof.

18. Temporary window fixing kit for vehicles, according to any of the previous claims, **characterized in that** the sheet (2) is a transparent PVC sheet.

19. Temporary window fixing kit for vehicles, according to any of the previous claims, **characterized in that** the sheet (2) incorporates a water-repellent treatment on at least one of its sides.

20. Temporary window fixing kit for vehicles, according to claim 4, **characterized in that** the cutting tool (5) is a pair of scissors.

21. Temporary window fixing kit for vehicles, according to claim 4, **characterized in that** the marking tool (6) is a felt-tip pen or marker type.
